# EUROPEAN PATENT APPLICATION

(11) **EP 1 291 246 A2**
(43) Date of publication of application: **12.03.2003**
(21) Application number: 02256153.4
(22) Date of filing: 05.09.2002
(51) Int. Cl.: B60R 16/00

(54) **Cable loom system**

(30) Priority: 06.09.2001 GB 0121513
(71) Applicant: DKR Electrical Services (Lancaster) Limited, Carnforth LA5 9EU (GB)
(72) Inventor: Kelly, John Anthony, Morecambe, Lancashire LA4 6DG (GB)
(74) Representative: Cardwell, Stuart Martin

(57) **Abstract**

A cable loom comprising a plurality of cables and in which elasticated wrap means 17 is applied to the cables at periodic spaced intervals to bundle the cables together. The cables are provided with end terminals. The elasticated wrap means comprise a continuous loop. The utilisation of elasticated wraps allows the pre-formed looms to bend which is necessary during subsequent installations.

A method of applying the elasticated wrap means to the cables is described that involves moving the cables through an application tool 15 loaded with a plurality of elasticated wraps and periodically transferring an elasticated wrap from the application tool to the cables to hold them together as a bundle.

In an alternative the elasticated wraps each comprise a length of elastic that is wrapped and secured around the cables at periodic spaced intervals.

## Description

The present invention relates to a method of looming cables, especially computer cables, but without limitation to same.

Installing computer cabling in buildings for network installations is particularly time consuming. It requires the installer to run the computer cables from the computer room to the desired output locations. Each output location may have multiple socket outlets so a corresponding number of cables have to be run between the outlet and the rack in the computer. 12, 20 and 24 outlets are not uncommon, and the computer room patch panels frequently cater for 48 cable connections. Many outlet boxes will be present on each floor of a building.

Wiring on site typically involves positioning at the outlet location a number of cable reels corresponding to the number of outlets required; drawing out the cables and placing them in the appropriate cable runs leading back to the computer room. Then the cables have to be cut to length and connections added, taking care to ensure that the opposite ends of each cable are marked so that the connections are made to the appropriate patch panels and outlets.

The time involved on site is considerable and the installer has to work round the other trades that might be on site at the same time.

In an attempt to cut down the onsite installation time, it has been proposed to build up looms offsite, including all the necessary end terminals and to bundle the cables together using tie wraps. However, if they are fixed too tightly they do not allow the necessary flexibility for turning corners, and if they are tied too lightly, they can give rise to snagging of the cable at the tie wraps, and consequential kinking and damage to the cable. Another proposal has been to use a machine to draw out a plurality of cables and to continuously bind them together using a polymer film wrap. However, it has been found that this technique creates a pseudo multi-core cable effect which gives rise to inductance and interference problems because of the regular way in which the cables are bound together.

The present invention aims to provide a means of building up looms of cable which avoids the above mentioned problems and simplifies installation in a building.

Accordingly, a first aspect of the invention provides a method of making a cable loom comprising drawing out a plurality of cables and characterized by applying elasticated wraps to the plurality of cables at periodic intervals therealong to encircle the cables to hold them together as a bundle at said intervals.

In one method each elasticated wrap is formed by securing a length of elastic around the cables at the desired periodic intervals. The elastic is cut from a long length of elastic. Conveniently it is applied using a machine. Conveniently the machine ties the elastic around the cables. Any other means of securing the elastic in a band around the cables may be used, e.g. adhesive, welding or a mechanical fixing. The wraps may be applied periodically as the cables are being drawn out to their full length.

In another method the elasticated wraps are preformed as continuous bands before application around the cables. In such a method the elasticated bands are conveniently loaded onto an applicator and the cables are moved through the applicator. I.e. a leading end of the cables is introduced into the applicator, whereby the elasticated bands may be slipped off the applicator and onto the cables at the desired periodic intervals. In such an embodiment the bands may be applied as the cables are being drawn through the applicator or after they have been drawn out to their full length by moving the applicator along the length of the cables.

The preformed continuous elasticated bands of the second embodiment may be formed by tying lengths of elastic around a former. The former may be the application tool. An application tool may be provided preloaded with elasticated tie wraps for use in performing the another method.

Accordingly, another aspect of the invention provides a method of making a cable loom comprising drawing out a plurality of cables a desired length, moving the cables through an application tool which is loaded with a plurality of elasticated wraps, and periodically transferring an elasticated wrap from the application tool to the plurality of cables at periodic intervals therealong to hold them together as a bundle at said intervals.

The elasticated nature of the wraps allows relative movement of the cables to cater for bends on installation, and the lack of any connection of the cables between the wraps avoids any pseudo multi-core effects.

In producing preformed cable looms for subsequent installation on site it is preferred to apply terminals to the opposite ends of the respective cables. Preferably the opposite ends are fitted with cable wraps or other identification means. Conveniently the leading ends are marked before play-out of the cables, and the trailing ends are correspondingly marked when the cables are drawn out to the desired length and before separation from the cable supply rolls. It is particularly convenient if each cable is feed from the supply reel through a play-out guide hole. Preferably there are a plurality of play-out guide holes disposed side by side in a guide plate.

More conveniently still, a jig is used at the leading end to set the relative position of the cables in the bundle so that on installation they have the required length to fit in the intended location in the outlet panel. The cables are placed in respective locations of the jig and the plurality of cables are secured with respect to one another. This is conveniently done using an adhesive tape such as a plastic installation tape. By this means the length of cable beyond this securing wrap will provide the necessary staggered ends for connecting for the outlet panel. Preferably a marker is applied, using a cable wrap that indicates to the person fitting the terminal where the sheath is to be cut away. A similar system may be used at the other end for connection to the computer patch panels.

Branches from the loom can also be accommodated. When producing cable looms according to said another method, the cables are drawn out the desired length and the application tool fitted at the leading end and drawn along the bundle of cables toward the origination point and elastic ties applied as it is moved back. When a branch is required the cables forming the branch are initially excluded from the cables passing through the application tool thereby allowing wraps to be applied to the cables up to the point where the branch splits off. The cables of the branch are bound separately by drawing them through an application tool and applying wraps in the same way. Usually this will be a separate application tool and once the branch is wrapped up to the split point, the application tool for the branch is removed and the bound branch introduced into the first application tool that is still in place on the cables so that the binding can be continued with the original cables and the cables leading to the branch. This process is repeated as often as necessary until the cable has been bound along its length. Alternatively when producing cable looms according to said one method, the wraps are applied separately to the respective bunches of cables forming the main loom and any branches thereof by tying the elastic around the cables at the prescribed intervals. The branches are preferably tied to the main bundle at the end and/or at periodic intervals by any conventional means for convenience of transportation on site.

As far as transportation is concerned, we have found it particularly advantageous to have the looms formed into a plurality of loops and hang them from a carrier frame. The loops can be held to the carrier frame by tie wraps or by replaceable strapping means. We find double sided velcro strapping to be particularly useful in this regard. For long loom lengths we find it particularly convenient to construct the carrier frame as an A frame that is free standing. This is advantageous for loading and unloading. However, in order to reduce the amount of space required for transportation thereby increasing the number of carrier frames that can be accommodated in any given transportation vehicle, we have found it particularly advantageous if the A frame is contractable with regards its width wise dimension at the base. To this end we provide a releasable stabilising strut or adjustable brace member that allows the A frame to be moved between a transportation position in which the members forming the A shape are closed towards one another, and a loading and unloading position in which they adopt the A frame shape.

For shorter loom lengths and for ease of transportation, we find it advantageous to mount the frame on which the loom is hung on a pallet, a full or half sized pallet may be used depending on the access requirements. The pallet allows handling by a pallet truck.

The elasticated tie wraps used in said another method conveniently comprise an elastic band. It may comprise a stretch fabric material or a length of elastic contained within a fabric sheath. A length of stretch material which is joined at its end to form a continuous loop - such as a hair band has been found to work particularly well. The fabric outer enables it to be gripped easily so that it can be removed from the application tool quickly, and it also protects the internal elasticated material from deterioration. In the case of said one method any convenient form of elastic may be used which is suited to being formed into a continuous band around the cables.

Another aspect of the invention provides a cable loom providing a plurality of cables and characterised in that elasticated wrap means is applied to the cables at periodic spaced intervals to bundle them together. More particularly, the ends of the cables are provided with terminal connections.

The present invention will now be described further, by way of example only, with reference to the accompanying drawings; in which:-

Figure 1 is a fragmentary exploded perspective view showing the apparatus features used in the invention,

Figure 2 is a fragmentary perspective view illustrating one step in the method,

Figure 3 is an exploded perspective view illustrating alternative apparatus for use in the invention,

Figure 4 is a perspective view of a first embodiment of carrier frame,

Figures 5 and 6 are perspective views of two alternative embodiments of carrier frame.

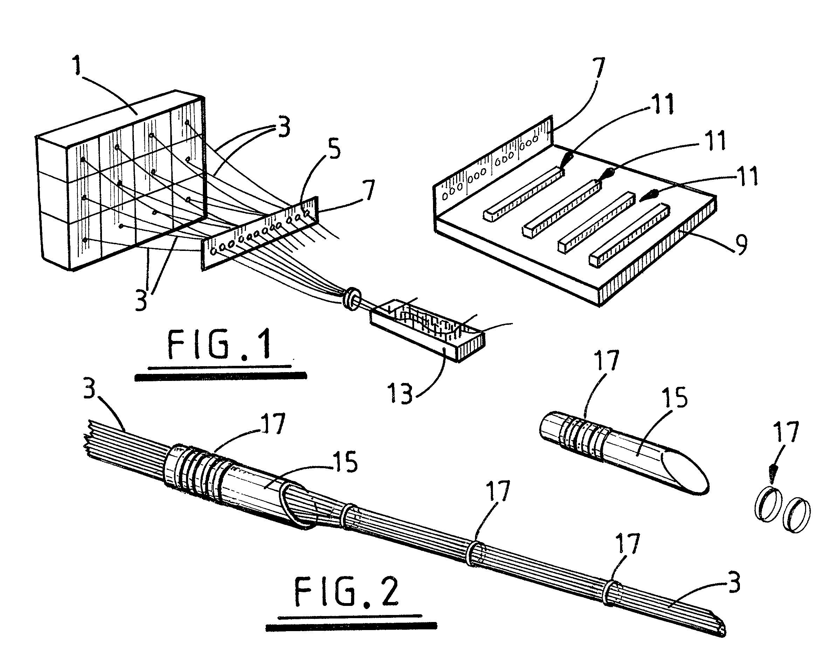

Referring firstly to Figure 1, there is illustrated a plurality of boxes 1 each accommodating a cable reel. The cables thereof 3 are played-out from the cable reel and each cable threaded through a guide hole 5 in a guide plate 7. The guide holes are disposed in spaced side by side relation. Conveniently they are grouped in a series of six holes. Advantageously the guide is secured to a jig table 9 that has divisions defining the patch panel configuration corresponding to that to which the cables are to be connected for the intended application. In the example, only three slots 11 are shown. In practice there can be many more than three patch panels. The jig table is positioned accurately in relation to a datum line D from which the required length of cable is measured. Also illustrated is a wiring jig 13 an application tool 15 and elasticated wraps 17.

The wiring jig 13 is used for setting the length of cables required for wiring the ends of the cables so that they fit in the intended outlet connector with the required offset. The wiring jig comprises a plurality of upstanding prongs that are configured to temporarily grip the cables and hold them in the relation to one another that they will adopt when their end terminals are fitted into the terminal holder of the outlet panel. There are 4 prongs for each cable. Other constructions can be used that have the same functional effect. Their use is described further hereinafter.

The illustrated application tool 15 comprises a hollow cylinder approximately 0.6-1 m in length and having a diameter suited for the passage therethrough of the desired number of cables and their connections. Generally a diameter of the order of 50-75mm suffices. The end is cut on the slant for ease of loading the exterior thereof with the elasticated wraps 17.

The invention provides a method of producing cable looms to suite a particular application thereby enabling the made up loom to be delivered and installed on site. It is intended that the method is utilised off site. In carrying out the method, the number of looms, their length, and the number of terminals and branches are determined from the plans of the building that detail the location of the computer cable terminal racks and the output boxes and from which the lengths of the cable runs can be determined. The looms are made up of the appropriate number cables e.g. 12, 24, 36, 48 etc., usually according to the number of terminals on the patch panel in the computer room. Thus if there are 48 terminals on the patch panel, a cable loom having 48 cables is prepared (assuming of course that there are 48 outlets somewhere throughout the building). Most usually the 48 cables will go to different outlet boxes and an analysis of the plan determines how each room is to be configured. Specifically the number of outlet terminals and their distance from the patch panel.

Having determined the length of loom required to stretch from the patch panel to the furthest outlet box, and a number of cables required at that output box, that number of cables are drawn out from the cable boxes through the guide holes and the wiring jig used to set the relative end offsets and to mark up the cables whereupon the cables are bound to maintain that offset - conveniently using adhesive insulating tape. The position at which the tape is applied is used as the datum for measuring the length of the loom. The length of cable beyond the loom is sufficient to reach the location of the outlet panel in which the end terminals are fitted.

The cable is then drawn out the full length to the outlet position, measuring from the datum. For convenience the cable is drawn out over a calibrated surface extending linearly from the datum. This may be the floor or an elevated support surface. For some applications the floor plans are marked out with a grid corresponding to the size of the access panels making up the access floor. Usually these have a standard size of 0.6m square. The surface is conveniently calibrated in these units and/or with an actual length.

The application tool is preloaded with a plurality of elasticated wraps. The size of the wraps is chosen to give a good grip on the number of cables to be bound in the loom. A loop size is chosen which allows the elasticated wraps to be doubled to give the best grip. Once the cable has been drawn out, the end of the cable is passed through the hollow core of the pre-loaded application tool. The tool is then drawn along the length of the cables and an elasticated wrap slipped off the tool onto the cable at regular intervals. We have found that wrapping at approximately 600mm centres is satisfactory. The wrapping is continued until the cable is wrapped all along or until the node of any branch is reached. Branches are bound separately in a corresponding manner. Any bound branch is then fed through the application tool and binding recommenced to complete binding in the branch beyond the node with the other cables back to the end which are provided with the terminals for the patch panels. Any other branches are accommodated in the same manner. Figure 2 illustrates the above process. Since the majority of looms incorporate branches, we have found that applying the wraps in the above manner works best.

For cable looms that do not have branches, the cables can be drawn through a static application tool and wraps applied as it is drawn through. However this requires two people and so is a less preferred option to the former procedure described above.

The cable is bound at the datum point and the cables led from there to the locations where the terminal connections will be located to suite the patch panel connectors using the jig as a guide to their intended location and the plans which indicate which rack they are to located in. This gives the desired lengths with the offset from the datum point and ensures that on installation the cables feed neatly through to the patch panels without any kinking.

In drawing the cables through the guide plate holes, each cable is marked with a unique number. This can be written onto the cable with a pen or a preprinted cable wrap applied thereto. The number is positioned in the wiring jig and in a specific position in relation to the jig so that the person fitting the terminal knows to cut back the sheath to the point carrying the identification number in the certainty that the wires will have the correct length. At the other end of the cable the same number is applied to the cable as at the first end. The correct cable is easily identified before it is cut from the reel as the cables pass through the side by side guide holes and the numbers increase from the first hole. Thus for example the third cable will have a number two higher than the first cable.

The terminals can be fitted to the cables as the loom is being collated, but it is more time efficient to have the terminals fitted after the looms have been bound with the elasticated wraps.

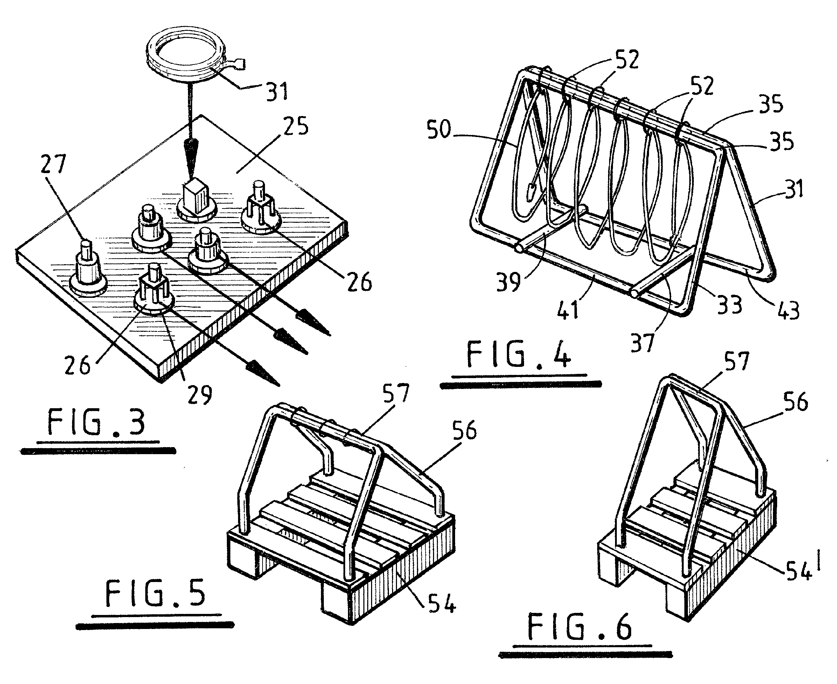

Figure 3 illustrates apparatus which is useful in creating looms from cables provided on reels or in unsupported coils especially cable that is already fitted with end terminals. It can also be used for unwinding cable provided on reels or in unsupported coils.

Traditionally, cable reels are mounted on a horizontal bar to facilitate playing out the cable. Where several reels are to be mounted on the same axle, replacing any one with another one when the reel is empty is time consuming as it involves taking other reels off the axle to gain access to the reel which is to be changed. Another aspect of the present invention aims to provide a solution. In a modification, means is provided to allow unsupported coils to be conveniently uncoiled.

Accordingly, another aspect of the invention provides apparatus comprising at least one stub axle mounted substantially vertically to receive a hub for rotation thereon, the hub having a flange to a lower side thereof and wherein the hub receives cable to be unwound therefrom.

Cable supplied loosely coiled is fitted over the hub to facilitate unwinding of the coil. In an alternative, the hub is constituted by a flanged reel on which cable is wound. Preferably there are a plurality of stub axles mounted on a carrier therefor.

Figure 3 illustrates a carrier 25 having mounted thereon 6 upstanding stub axles 27. Hubs 26 are fitted onto the stub axles and comprise a cylindrical core which may be circular or non-circular in cross section. The core may be formed by a plurality of upstanding bars. The core has a radially extending flange 29 to one end. The hub is rotatable on the stub axle. A coil of unsupported cable having terminals fitted to its opposite ends is shown at 31. It is placed onto the core. Pulling one end of the cable causes it to tighten on the hub and rotate the hub thereby allowing the coil to be easily unwound. Such an unwinding system can be used in the method of the invention and the application tool used to fit elasticated wraps to a bundle of cables to form a loom. Where the apparatus is used to unwind unsupported coils provided with terminals for use as a relatively short loom running from output boxes to computer equipment without branches, the application tool can be static as mentioned above and the cables played out through the application tool and the elasticated wraps applied thereto.

Figure 4 illustrates a first embodiment of storage and transportation frame for the bound loom. It comprises an A frame conveniently made up of two loops 31, 33 that are interconnected in a manner that allows for pivoting. The axis of pivoting is aligned with the upper rails 35. Struts 37, 39 interconnect lower rails 41, 43 to hold the frame in its a configuration during loading and unloading of the loom. The loom 50 is looped and each loop located with respect to the frame by a suitable connection 52. This may be a tie wrap or a releasable strap connector such as double sided velcro. Once a loom is secured with respect to the frame, the frame can have the two halves closed together by releasing each strut from one rail. By this means the frame occupies less space in transit. When on site the frame is opened up and the loom removed as required by releasing the ties.

Figure 5 illustrates an alternative for a small loom where the frame 56 is mounted from a pallet 54 to facilitate ease of movement by a pallet truck. The loom is tied from a horizontal rail 57 of the frame 56 in a similar manner to that described above.

Figure 6 illustrates an alternative configuration for use where access is limited and utilises a half pallet 58 which fits through a standard door opening. Otherwise the construction is the same as that illustrated in Figure 5.

An alternative form of application comprises a machine for forming bands of elastic which is capable of taking a length of elastic and wrapping it around a bunch of cables to form a continuous band. A preferred machine ties the elastic around the cables to form the continuous band. The elastic is drawn from a long length of elastic. The elastic is tied round the cables at the desired periodic intervals. The use of such a system avoids the need for passing the bunched cables through the application tool and permits easy application of an elasticated tie at any desired location at any time during the loom function process. Using such an application the need to draw out the cables to their full length prior to wrapping may be avoided, although for some designs of cable this may still be desirable e.g. looms having numerous branches.

The other features of the loom mentioned herein are equally applicable irrespective of whether the elasticated wraps are applied as preformed continuous bands or formed around the cables at desired positions from a length of elastic.

## Claims

1. A method of making a cable loom comprising drawing out a plurality of cables 3 and **characterized by** applying an elasticated wrap 17 to the plurality of cables at periodic intervals therealong to encircle the cables to hold them together as a bundle at said intervals.

2. A method as claimed in claim 1 in which the elasticated wraps are formed by wrapping and securing a length of elastic around the cables at the desired periodic intervals.

3. A method as claimed in claim 1 or 2 in which the elasticated wraps are formed by tying together the ends of a length of elastic.

4. A method of making a cable loom comprising drawing out a plurality of cables 3 a desired length and **characterized by** moving the cables through an application tool 15 which is loaded with a plurality of elasticated wraps 17, and periodically transferring an elasticated wrap from the application tool to the plurality of cables at periodic intervals therealong to encircle them and to hold them together as a bundle at said intervals.

5. A method as claimed in any one of claims 1 to 4 and further comprising applying terminals to the opposite ends of the respective cables.

6. A method as claimed in any one of claims 1 to 5 in which the opposite ends of the cables are fitted with cable wraps or other identification means and in which the leading ends of the cables are marked before play-out of the cables, and the trailing ends are correspondingly marked when the cables are drawn out to the desired length and before separation from cable supply reels.

7. A method as claimed in any one of claims 1 to 6 in which each cable is feed from the supply reel through a play-out guide hole and in which there are a plurality of play-out guide holes disposed side by side in a guide plate.

8. A method as claimed in any one of claims 1 to 7 comprising using a jig at the leading end to set the relative position of the cables in the bundle so that on installation they have the required length to fit in the intended location in an outlet panel, and in which the cables are placed in respective locations of the jig and the plurality of cables are secured fixedly with respect to one another.

9. A method as claimed in any one of claims 4 to 8 when appended to claim 1 in which the cables are drawn out the desired length and the application tool fitted at the leading end and drawn along the bundle of cables toward the origination point and elastic ties applied as it is moved back.

10. A method as claimed in claim 9 in which when a branch is required the cables forming the branch are initially excluded from the cables passing through the application tool thereby allowing wraps to be applied to the cables up to the point where the branch splits off and the cables of the branch are bound separately by drawing them through an application tool and applying wraps in the same way, and once the branch is wrapped up to the split point, the application tool for the branch is removed and the bound branch introduced into an application tool and binding continued with the original cables and the cables leading to the branch.

11. A method as claimed in any one of the preceding claims and further comprising forming the loom into a plurality of loops and hanging them from a carrier frame.

12. A cable loom comprising a plurality of cables and **characterised in that** elasticated wrap means (17) is applied to the cables at periodic spaced intervals to encircle the cables and thereby to bundle them together.

13. A cable loom as claimed in claim 12 in which the ends of the cables are provided with terminal connections.

14. A cable loom as claimed in claims 12 or 13 in which the elasticated wrap means comprises an elastic band.

15. A cable loom as claimed in claims 12, 13 or 14 in which the elasticated wrap means comprises a stretch fabric material or a length of elastic contained within a fabric sheath in the form of a continuous loop.

16. A cable loom as claimed in any one of claims 12 to 15 when hung from a carrier.
